# EUROPÄISCHE PATENTANMELDUNG

(11) **EP 0 793 373 A2**
(43) Veröffentlichungstag der Anmeldung: **03.09.1997**
(21) Anmeldenummer: 97400372.5
(22) Anmeldetag: 20.02.1997
(51) Int. Cl.: H04M 3/30, H04B 10/08

(54) **Vorfeldeinrichtung eines Nachrichtenübertragungssystems und Verfahren zum Generieren und Übertragen von Überwachungssignalen**

(30) Priorität: 21.02.1996 DE 19606345
(71) Anmelder: ALCATEL ALSTHOM COMPAGNIE GENERALE D'ELECTRICITE, 75008 Paris (FR)
(72) Erfinder: Weiss, Ulrich, 70839 Gerlingen (DE)
(74) Vertreter: Knecht, Ulrich Karl, Dipl.-Ing.

(57) **Zusammenfassung**

In einem Nachrichtenübertragungssystem (SYS) mit einer Zentrale (ZE), mehreren Vorfeldeinrichtungen (BONT, ONU, KVz) und mehreren Endstellen (END) werden Baugruppen der Vorfeldeinrichtungen (BONT, ONU, KVz), z.B. optisch/elektrische Umsetzer (OE) und/oder Verstärker (AMP), überwacht und die Überwachungssignale zur Zentrale (ZE) übertragen. Eine Vorfeldeinrichtung (BONT, ONU, KVz) ist z.B. ein optischer Breitbandnetzabschluß (BONT). Jeder optische Breitbandnetzabschluß (BONT) beinhaltet einen digitalen Signalprozessor (DSP) zum Verarbeiten der Überwachungssignale und zum Generieren von Telegrammen mit der individuellen Adresse (ADR) des optischen Breitbandnetzabschlusses (BONT), eine Einrichtung (ZG) zur Generierung von zeitlich variablen Sendezeiten, zu denen die Telegramme zur Zentrale (ZE) übertragen werden, sowie einen FSK-Modulator (FSK) zur Modulation der Telegramme.

## Beschreibung

Die Erfindung betrifft eine Vorfeldeinrichtung eines Nachrichtenübertragungssystems nach dem Oberbegriff des Patentanspruchs 1 und ein Verfahren zur Generierung und Übertragung von Überwachungssignalen nach dem Oberbegriff des Patentanspruchs 4.

Aus der Patentschrift US 5,301,050 ist ein Verfahren zur Überwachung von Teilnehmeranschlußleitungen eines hybriden Nachrichtenübertragungssystems bekannt. Jede optische Netzabschlußeinrichtung, eine sog. Optical Network Unit (ONU), beinhaltet eine Überwachungseinrichtung mittels derer sie Tests zur Überwachung der Teilnehmeranschlußleitungen durchführt. Die Testergebnisse werden in der Überwachungseinrichtung zwischengespeichert und auf Anfrage durch eine Zentrale zu derselben übertragen. Die Abfrage der Testergebnisse ist zeitaufwendig und erfordert einen bidirektionalen Betrieb zwischen Zentrale und optischen Netzabschlußeinrichtungen.

Es ist deshalb die Aufgabe der Erfindung, Überwachungssignale technisch weniger aufwendig zu einer Zentrale zu übertragen.

Diese Aufgabe wird durch die Lehre der Patentansprüche 1 und 4 gelöst. Vorteilhafte Ausgestaltungen sind den abhängigen Patentansprüchen 2, 3, 5 und 6 zu entnehmen.

Ein besonderer Vorteil der Erfindung liegt in der schaltungstechnischen Vereinfachung der Zentrale und der Vorfeldeinrichtungen aufgrund des Wegfalls einer Sendeeinrichtung in der Zentrale und einer Empfangseinrichtung mit Synchronisationseinrichtung in jeder Vorfeldeinrichtung.

Ein weiterer Vorteil der Erfindung liegt darin, daß aufgrund des unidirektionalen Betriebs größere Entfernungen zwischen Zentrale und Vorfeldeinrichtungen überbrückbar sind.

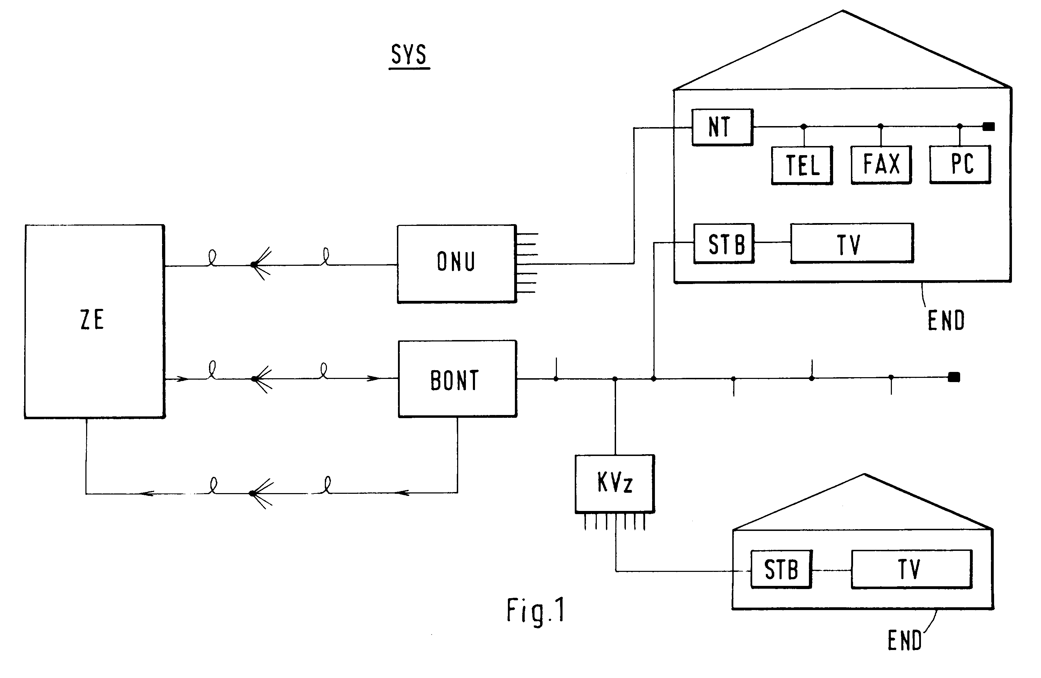

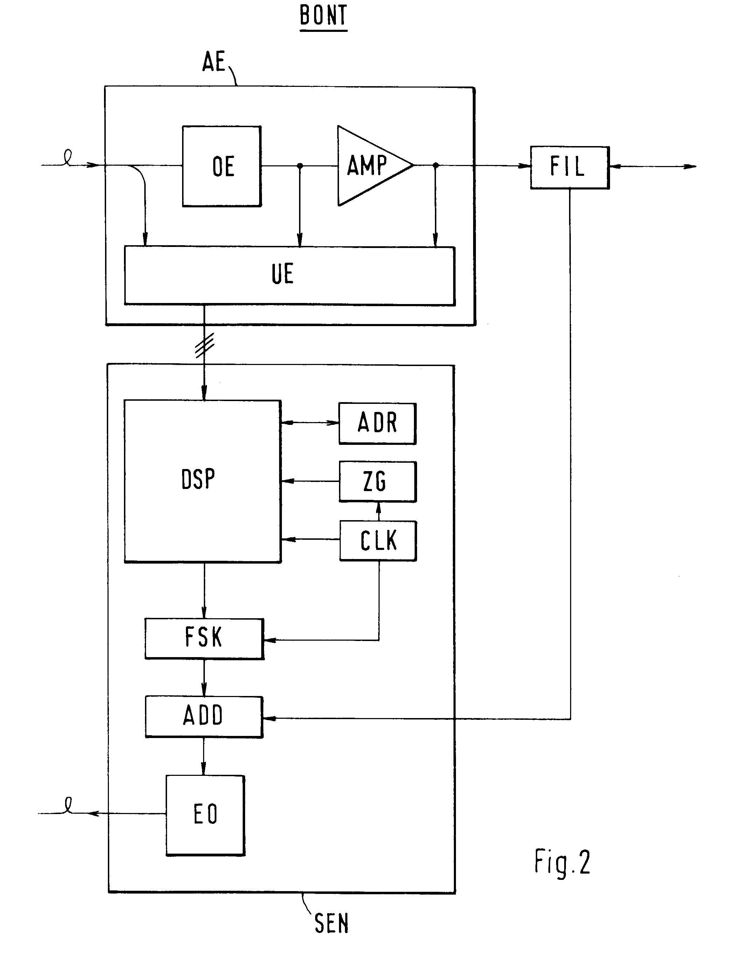

Im folgenden wird die Erfindung anhand eines Ausführungsbeispiels unter Zuhilfenahme der Figuren 1 und 2 erläutert. Es zeigen:
Fig. 1 eine schematische Darstellung eines erfindungsgemäßen Nachrichtenübertragungssystems, und
Fig. 2 einen schematisch dargestellten Aufbau einer erfindungsgemäßen Vorfeldeinrichtung.

Fig. 1 zeigt als Ausführungsbeispiel eines erfindungsgemäßen Nachrichtenübertragungssystems ein hybrides Übertragungssystem, bei dem Nachrichten von einer Zentrale ZE über Punkt-zu-Mehrpunkt Verbindungen und über mehrere Vorfeldeinrichtungen ONU, BONT, KVZ zu mehreren Endstellen END übertragen werden, sowie Nachrichten von mehreren Endstellen und mehreren Vorfeldeinrichtungen ONU, BONT, KVZ zur Zentrale ZE übertragen werden.

Die Zentrale ZE dient dem Aussenden von Breitband- und Schmalbandsignalen. Breitbandsignale sind z.B. Videosignale im Frequenzband von 47 bis 862 MHz, die z.B. von einer Kopfstation aus über optische Glasfaserkabel ausgesendet, in der Zentrale ZE empfangen, optisch verstärkt und über optische Glasfaserkabel ausgesendet werden. Schmalbandsignale sind z.B. Sprach- und Datensignale aus einem diensteintegrierenden digitalen Netz, das sog. ISDN, die in der Zentrale ZE empfangen, gegebenenfalls gemultiplext, elektrisch/optisch umgesetzt und über optische Glasfaserkabel ausgesendet werden. Die Zentrale ZE beinhaltet dazu einen optischen Verstärker, der z.B. ein Erbium-dotierter Faserverstärker ist, einen Multiplexer und einen elektrisch/optischen Umsetzer, der z.B. eine direkt ansteuerbare Laserdiode enthält.

Des weiteren dient die Zentrale zum Empfang von Schmalbandsignalen. Die Schmalbandsignale sind z.B. Sprach- und Datensignale, Abrufsignale und Überwachungssignale. Die Sprach- und Datensignale sind z.B. Signale von Fernsprechgeräten TEL, Bildtelefonen, Fernkopierern FAX oder Computern PC. Die Abrufsignale sind z.B. Signale einer Set-Top-Box STB zum Abrufen von Videofilmen. Die Überwachungssignale sind Signale der Vorfeldeinrichtungen, die angeben, ob wenigstens eine Baugruppe je Vorfeldeinrichtung fehlerfrei oder fehlerbehaftet arbeitet. Die Zentrale ZE beinhaltet dazu eine Sende-/Empfangseinrichtung, in der die empfangenen Schmalbandsignale getrennt werden. Die empfangenen Sprach- und Datensignale werden zum diensteintegrierenden digitalen Netz übertragen. Die Abrufsignale werden zu einem Video-Server übertragen, der sich z.B. in der Kopfstation befindet. Die Überwachungssignale werden zu einer sich in der Zentrale ZE befindlichen Alarmregistrierungseinheit übertragen, in denen sie gespeichert und im Falle einer fehlerbehafteten Arbeitsweise einer Vorfeldeinrichtung zusätzlich auf einem Bildschirm dargestellt werden. Alternativ können die Überwachungssignale zu einem Netzmanagementsystem übertragen werden, das die von mehreren Zentralen weitergeleiteten Überwachungssignale zentral erfaßt.

Eine Vorfeldeinrichtung ist z.B. eine optische Netzabschlußeinheit ONU. Der Aufbau einer optischen Netzabschlußeinheit ONU ist z.B. aus dem Artikel "Alcatel 1570 NB-optische Kommunikation bis zum Teilnehmer" aus der Firmenzeitschrift STR-Report 1/2-1995, Seiten 65 bis 78, bekannt. Die optische Netzabschlußeinheit ONU dient dazu die von der Zentrale empfangenen optischen Schmalbandsignale in elektrische Signale umzusetzen, aufzubereiten und über, ggf. unterschiedliche Schnittstellen zu mehreren Endstellen END zu übertragen, sowie die elektrischen Schmalbandsignale mehrerer Endstellen END in optische Signale umzusetzen und zur Zentrale ZE zu übertragen. Die optische Netzabschlußeinheit ONU beinhaltet dazu z.B. eine Aufbereitungseinrichtung mit einem optisch/elektrischen Umsetzer, einer Schnittstelle für eine ISDN-Basisanschlußkonfiguration und eine Schnittstelle für eine analoge Mietleitung. Zusätzlich beinhaltet die Aufbereitungseinrichtung nun eine Überwachungseinrichtung zur Überwachung wenigstens einer Baugruppe der Aufbereitungseinrichtung, z.B. den optisch/elektrischen Umsetzer. In der Überwachungseinrichtung werden Überwachungssignale generiert, die angeben, ob z.B. der optisch/elektrische Umsetzer fehlerbehaftet oder fehlerfrei arbeitet. Die Überwachungssignale werden zu einer sich in der optischen Netzabschlußeinheit ONU befindlichen Sendeeinrichtung, die u.a. einen elektrisch/optischen Umsetzer beinhaltet, übertragen, in dieser Sendeeinrichtung verarbeitet und zusammen mit den Sprach- und Datensignalen der Endstellen END zur Zentrale ZE übertragen.

Eine weitere Vorfeldeinrichtung ist z.B. ein optischer Breitbandnetzabschluß BONT. Der Aufbau eines optischen Breitbandnetzabschlusses BONT ist z.B. aus dem Artikel "FITL CATV: ein Übertragungssystem mit optischen Verstärkern für analoge TV-Signale" aus der Firmenzeitschrift Elektrisches Nachrichtenwesen, 3. Quartal 1993, Seiten 248 bis 259 bekannt. Der optische Breitbandnetzabschluß BONT beinhaltet eine Aufbereitungseinrichtung mit einem optisch/elektrischen Umsetzer zur Umsetzung der empfangenen optischen Breitbandsignale in elektrische Signale und wenigstens einen Verstärker zum Verstärken der elektrischen Signale. Die aufbereiteten Signale werden über Koaxialkabel zu den Endstellen END übertragen. Zusätzlich beinhaltet der optische Breitbandnetzabschluß BONT nun eine Überwachungseinrichtung zur Überwachung wenigstens einer Baugruppe der Aufbereitungseinrichtung, z.B. den optisch/elektrischen Umsetzer. In der Überwachungseinrichtung werden Überwachungssignale generiert, die angeben, ob der optisch/elektrische Umsetzer fehlerbehaftet oder fehlerfrei arbeitet. Die Überwachungssignale werden zu einer sich in dem Breitbandnetzabschluß befindlichen Sendeeinrichtung, die u.a. einen elektrisch/optischen Umsetzer beinhaltet, übertragen, in dieser verarbeitet und zusammen mit den Abrufsignalen mehrerer Endstellen END optisch zur Zentrale ZE übertragen.

Eine weitere Vorfeldeinrichtung ist z.B. ein Kabelverzweiger KVz. Der Kabelverzweiger KVz ist zwischen dem optischen Breitbandnetzabschluß BONT und mehreren Endstellen END angeordnet. Der Kabelverzweiger KVz beinhaltet eine Aufbereitungseinrichtung mit einem breitbandigen Verstärker, in dem die elektrischen Breitbandsignale verstärkt werden und eine Überwachungseinrichtung, in der Überwachungssignale generiert werden, die angeben, ob der breitbandige Verstärker fehlerbehaftet oder fehlerfrei arbeitet. Die Überwachungssignale werden zu eine sich im Kabelverzweiger KVz befindlichen Sendeeinrichtung, die u.a. einen schmalbandigen Verstärker beinhaltet, übertragen, in dieser verarbeitet und zusammen mit den Abrufsignalen mehrerer Endstellen END zur Zentrale ZE übertragen.

Endstellen END, die über einen Kabelverzweiger KVz oder direkt über ein Koaxialkabel mit einem optischen Breitbandnetzabschluß BONT verbunden sind, haben z.B. eine Set-Top-Box STB und ein Fernsehgerät TV zur Darstellung der empfangenen Breitbandsignale und zum Senden von Abrufsignalen.

Endstellen END, die mit einer optischen Netzabschlußeinheit ONU verbunden sind, haben z.B. einen Netzabschluß NT, ein ISDN-Fernsprechgerät TEL, einen Fernkopierer FAX und einen Computer PC mittels derer die Sprach- und Datensignale empfangen und gesendet werden.

Die Zentrale ZE ist im Ausführungsbeispiel über ein gemeinsames Glasfaserkabel, einen optischen 1:16 Splitter und 16 separate Glasfaserkabel mit 16 optischen Netzabschlußeinheiten ONU verbunden, von denen eine dargestellt ist. Die Übertragung von Sprach- und Datensignalen auf den Glasfaserkabeln erfolgt bidirektional. Die Zentrale ZE ist ferner über zwei voneinander unabhängige optische 1:16 Splitter und Glasfaserkabel jeweils doppelt mit 16 optischen Breitbandnetzabschlüssen BONT verbunden, von denen einer dargestellt ist. Die Übertragung von Nachrichten auf den Glasfaserkabeln erfolgt unidirektional. Über den einen optischen Splitter werden die Breitbandsignale zu den optischen Breitbandnetzabschlüssen BONT übertragen und über den anderen optischen Splitter werden die Anforderungssignale von Set-Top-Boxen STB und die Überwachungssignale von den optischen Breitbandnetzabschlüssen BONT zur Zentrale ZE übertragen. Jede optische Netzabschlußeinheit ONU ist über Koaxialkabel mit mehreren Endstellen END verbunden, wovon eine beispielhaft dargestellt ist.

Jeder optische Breitbandnetzabschluß BONT ist über Koaxialkabel mit mehreren Endstellen END direkt oder über einen Kabelverzweiger KVz verbunden. Ein Kabelverzweiger KVz und zwei Endstellen END sind beispielhaft dargestellt. Eine Endstelle END ist dabei mit einem optischen Breitbandnetzabschluß BONT und einer optischen Netzabschlußeinheit ONU beispielhaft verbunden. In diesem Fall kann ein und dasselbe Koaxialkabel sowohl zur Übertragung der Breitbandsignale als auch zur Übertragung der Schmalbandsignale verwendet werden. Des weiteren kann auch ein und dasselbe Glasfaserkabel zur Übertragung von Breitband- und Schmalbandsignalen verwendet werden, wenn sich ein optischer Breitbandnetzabschluß BONT und eine optische Netzabschlußeinheit z.B. in einem Gehäuse befinden.

Im folgenden wird nun die Übertragung der Überwachungssignale von den optischen Breitbandnetzabschlüssen BONT zur Zentrale ZE beschrieben. Für die Übertragung der Überwachungssignale von den optischen Netzabschlußeinheiten ONU und den Kabelverzweigern KVz zur Zentrale ZE gilt entsprechendes. Jeder optische Breitbandnetzabschluß BONT beinhaltet einen Zufallsgenerator zum Generieren von zeitlich variablen Sendezeiten. Jeder optische Breitbandnetzabschluß BONT sendet zu den individuell generierten Sendezeiten, die in einem vorgegebenen Zeitfenster liegen, seine aktuellen Überwachungssignale, die eine individuelle Adresse für jeden optischen Breitbandnetzabschluß BONT beinhalten. Aufgrund der zeitlich variablen Sendezeiten kann es vorkommen, daß die Überwachungssignale zweier optischer Breitbandnetzabschlüsse BONT gleichzeitig in der Zentrale ZE eintreffen, somit kollidieren und nicht detektierbar sind. Aufgrund der zeitlich variablen Sendezeiten besteht aber auch eine sehr geringe Wahrscheinlichkeit, daß die in der Zentrale eintreffenden Überwachungssignale eines optischen Breitbandnetzabschlusses BONT zwei oder mehrmals hintereinander mit Überwachungssignalen anderer optischer Breitbandnetzabschlüsse BONT kollidieren. Erst nach viermaligem Nichtempfangen von Überwachungssignalen eines optischen Breitbandnetzabschlusses BONT wird von einem Glasfaserkabelbruch ausgegangen und ein Alarm gemeldet. Die Überwachungssignale eines optischen Breitbandnetzabschlusses BONT werden beispielsweise alle 13 bis 15 Sekunden zur Zentrale ZE übertragen. Die einmalige Übertragung von Überwachungssignalen mit 64bit benötigt beispielsweise bei einer Übertragungsgeschwindigkeit von 64kbit/s 1 ms.

Fig. 2 zeigt nun den Aufbau eines erfindungsgemäßen optischen Breitbandnetzabschlusses BONT als erfindungsgemäße Vorfeldeinrichtung. Für die optischen Netzabschlußeinheiten ONU und die Kabelverzweiger KVz gilt bezüglich der Anordnung der erfindungswesentlichen Baugruppen entsprechendes.

Der optische Breitbandnetzabschluß BONT beinhaltet eine Aufbereitungseinrichtung AE, eine Sendeeinrichtung SEN und ein Filterelement FIL.

Die Aufbereitungseinrichtung AE beinhaltet einen optisch/elektrischen Umsetzer OE und einen Verstärker AMP, die in Reihe geschaltet sind, sowie eine Überwachungseinrichtung UE. Die empfangenen Breitbandsignale werden im optisch/elektrischen Umsetzer OE z.B. mittels einer Photodiode in elektrische Signale umgesetzt, anschließend im Verstärker AMP verstärkt, dem Filterelement FIL zugeführt, in dem sie mittels eines Bandpasses gefiltert und anschließend dem Koaxialkabel zugeführt werden.

Die Überwachungseinrichtung UE hat drei Eingänge und einen Ausgang. Der erste Eingang ist mit der optischen Empfangsleitung verbunden und dient der Überwachung der empfangenen Breitbandsignale. Mittels zweier Vergleicher, die aus Operationsverstärkern aufgebaut sind und als Komparatoren dienen, wird die optische Gleichleistung der empfangenen Breitbandsignale überwacht. Als Maß für die optische Gleichleistung dient der Photostrom durch die Photodiode. Der Spannungsabfall über einen vom Photostrom durchflossenen Widerstand wird parallel an beide Komparatoren angelegt. Der Vergleichswert an dem einen Komparator ist der minimale Sollwert, der Vergleichswert am anderen Komparator ist der maximale Sollwert. Die Ausgänge der Komparatoren sind mit den Eingängen eines ODER-Gatters verbunden. Ist die Amplitude der empfangenen Breitbandsignale zwischen minimalem und maximalem Sollwert, so sind die Ausgänge der Komparatoren logisch Null und auch der Ausgang des ODER-Gatters liefert eine logische Null. Unterschreitet die Amplitude den minimalen Sollwert oder übersteigt sie den maximalen Sollwert, so ist einer der Ausgänge der Komparatoren logisch Eins und auch der Ausgang des ODER-Gatters liefert eine logische Eins.

Der zweite Eingang der Überwachungseinrichtung UE ist mit dem Ausgang des optisch/elektrischen Umsetzers OE verbunden und dient der Überwachung der elektrisch umgesetzten Breitbandsignale. Die Überwachung der Amplitude der elektrischen Breitbandsignale erfolgt vergleichbar zur Überwachung der optischen Gleichleistung der empfangenen Breitbandsignale mit zwei Vergleichern und einem ODER-Gatter.

Der dritte Eingang der Überwachungseinrichtung UE ist mit dem Ausgang des Verstärkers AMP verbunden und dient der Überwachung der verstärkten elektrischen Breitbandsignale, die vergleichbar zur Überwachung der elektrisch umgesetzten Breitbandsignale mit zwei Vergleichern und einem ODER-Gatter erfolgt.

Am Ausgang der Überwachungseinrichtung UE liegen die Ausgangssignale der drei ODER-Gatter parallel an und werden der Sendeeinrichtung SEN als Überwachungssignale zugeführt.

Die Sendeeinrichtung SEN beinhaltet eine Verarbeitungseinrichtung, die im Ausführungsbeispiel als digitaler Signalprozessor DSP ausgeführt ist, einen FSK-Modulator FSK, einen Adreßgenerator ADR, eine Einrichtung ZG zur Generierung von zeitlich variablen Sendezeiten und einen Oszillator OSC.

In dem digitalen Signalprozessor DSP werden die Überwachungssignale verarbeitet und Telegramme, die die Adresse des optischen Breitbandnetzabschlusses BONT und die verarbeiteten Überwachungssignale enthalten, generiert.

Im FSK-Modulator FSK findet eine Modulation nach dem Verfahren der Frequenzumtastung, dem sog. Frequency Shift Keying statt. Es wird beispielsweise zwischen den Frequenzen 4,45 MHz und 4,55 MHz umgetastet.

Im Adreßgenerator ADR wird eine für den optischen Breitbandnetzabschluß BONT individuelle Adresse als digitale Bitfolge generiert, die dem digitalen Signalprozessor zugeführt wird.

Der Oszillator OSC generiert einen Takt, der den digitalen Signalprozessor DSP, den FSK-Modulator FSK und die Einrichtung ZG zur Generierung von zeitlich variablen Sendezeiten steuert.

Die Einrichtung ZG ist als Zufallsgenerator ZG ausgeführt.

Im Zufallsgenerator ZG werden zeitlich variable Sendezeiten generiert, zu denen die verarbeiteten Überwachungssignale in Form von Telegrammen, die die individuelle Adresse des optischen Breitbandnetzabschlusses BONT beinhalten, gesendet werden. Das Generieren der Sendezeiten erfolgt mit der Vorgabe, daß alle Sendezeiten periodisch generiert werden und in einem vorgegebenen Zeitfenster liegen, also alle aufeinanderfolgenden Sendezeiten eines optischen Breitbandnetzabschlusses BONT beispielsweise einen zeitlichen Abstand von 13 bis 15 Sekunden haben. Die generierten Sendezeiten werden dem digitalen Signalprozessor zugeführt.

Die Verarbeitung der Überwachungssignale im digitalen Signalprozessor DSP kann auf verschiedene Art und Weise erfolgen. Im folgenden werden beispielhaft vier Möglichkeiten aufgezeigt:
1) Die Ausgangssignale der drei ODER-Gatter werden einem dreifach ODER-Gatter zugeführt. Ist der Ausgang des dreifach ODER-Gatters logisch Null, so arbeitet die Aufbereitungseinrichtung AE fehlerfrei, ist er logisch Eins, so arbeitet sie fehlerbehaftet. Das Ausgangssignal des dreifach ODER-Gatters wird zusammen mit der individuellen Adresse zu den variablen Sendezeiten zum FSK-Modulator FSK übertragen.
2) Die Ausgangssignale der drei ODER-Gatter werden kodiert. Die Bitkombination 01 bedeutet, daß die empfangenen Breitbandsignale fehlerbehaftet sind. Die Bitkombination 10 bedeutet, daß der optisch/elektrische Umsetzer OE fehlerbehaftet arbeitet. Die Bitkombination 11 bedeutet, daß der Verstärker AMP fehlerbehaftet arbeitet. Die Bitkombination 00 bedeutet, daß die Aufbereitungseinrichtung AE fehlerfrei arbeitet. Die aktuellen Bitkombinationen werden zusammen mit der individuellen Adresse zum FSK-Modulator FSK zu den variablen Sendezeiten übertragen.
3) Anhand der Ausgangssignale der drei ODER-Gatter wird ermittelt, ob die Aufbereitungseinrichtung fehlerbehaftet oder fehlerfrei arbeitet, z.B. mittels eines dreifach ODER-Gatters wie in 1) beschrieben. Im Falle des fehlerfreien Betriebs wird die individuelle Adresse zum FSK-Modulator FSK zu den variablen Sendezeiten übertragen. Im Falle des fehlerbehafteten Betriebs wird nichts übertragen.
4) Um genauere Angaben über die Amplituden der Breitbandsignale zu erhalten werden die Überwachungssignale anstelle mit Vergleichern und ODER-Gattern mit A/D-Umsetzern generiert. So werden beispielsweise mittels zweier A/D-Umsetzer mit einer Auflösung von 16 bit die Amplituden der empfangenen Breitbandsignale und der verstärkten Breitbandsignale digitalisiert und zum digitalen Signalprozessor DSP übertragen. Die digitalen Überwachungssignale werden mit minimalen und maximalen Sollwerten, die im digitalen Signalprozessor DSP gespeichert sind, verglichen. Bei fehlerfreiem Betrieb der Aufbereitungseinrichtung AE werden die 32 bit der beiden A/D-Umsetzer zusammen mit den z.B. 4 bit der individuellen Adresse (4 bit für 2⁴ = 16 BONTs) zu den variablen Sendezeiten zum FSK-Modulator FSK in Form eines Telegramms übertragen. Bei fehlerbehaftetem Betrieb wird beispielsweise nur die individuelle Adresse zum FSK-Modulator FSK übertragen.

Die Sendeeinrichtung SEN beinhaltet des weiteren einen Addierer ADD und einen elektrisch/optischen Umsetzer EO.

Im Addierer ADD werden die FSK-modulierten Telegramme und die Abrufsignale der Endstellen, die vorab im Filterelement FIL mittels eines Tiefpasses gefiltert werden, addiert und anschließend dem elektrisch/optischen Umsetzer EO zugeführt. Im elektrisch/optischen Umsetzer EO werden die FSK-modulierten Telegramme und die Abrufsignale in optische Signale umgesetzt, die über Glasfaserkabel zur Zentrale ZE übertragen werden.

## Patentansprüche

1. Vorfeldeinrichtung (BONT, ONU), insbesondere Netzabschlußeineinheit eines Nachrichtenübertragungssystems (SYS), mit einer Aufbereitungseinrichtung (AE) zur Aufbereitung und Weiterleitung von empfangenen Nachrichtensignalen und einer Sendeeinrichtung (SEN) zur Verarbeitung und zum Senden von Überwachungssignalen,
**dadurch gekennzeichnet ,**
daß die Aufbereitungseinrichtung (AE) eine Überwachungseinrichtung (UE) zur Überwachung wenigstens einer Baugruppe der Aufbereitungseinrichtung (AE) und zur Generierung der Überwachungssignale beinhaltet, und daß die Sendeeinrichtung (SEN) eine Einrichtung (ZG) zur Generierung von zeitlich variablen Sendezeiten, zu denen die verarbeiteten Überwachungssignale gesendet werden, beinhaltet.

2. Vorfeldeinrichtung (BONT, ONU) nach Anspruch 1, dadurch gekennzeichnet, daß die Aufbereitungseinrichtung (AE) einen optisch/elektrischen Umsetzer (OE) und einen Verstärker (AMP) beinhaltet, die in Reihe geschaltet sind, und daß die Überwachungseinrichtung (UE) wenigstens einen Vergleicher zum Vergleich der empfangenen Nachrichtensignale, der Ausgangssignale des optisch/elektrischen Umsetzers (OE) und/oder der Ausgangssignale des Verstärkers (AMP) mit Sollwerten beinhaltet.

3. Vorfeldeinrichtung (BONT, ONU) nach Anspruch 1, dadurch gekennzeichnet, daß die Einrichtung (ZG) zur Generierung von zeitlich variablen Sendezeiten als Zufallsgenerator ausgeführt ist, daß die Sendeeinrichtung (SEN) eine Verarbeitungseinrichtung (DSP) zum Verarbeiten der Überwachungssignale und zum Generieren von Telegrammen, die die individuelle Adresse der Vorfeldeinrichtung (BONT, ONU) und die verarbeiteten Überwachungssignale enthält, beinhaltet, und daß die Sendeeinrichtung (SEN) einen FSK-Modulator (FSK) zur Modulation der Telegramme und einen elektrisch/optischen Umsetzer (EO) zur Umsetzung der modulierten Telegramme in optische Telegramme beinhaltet.

4. Verfahren zur Generierung und Übertragung von Überwachungssignalen von mehreren Vorfeldeinrichtungen (BONT, ONU) eines Nachrichtenübertragungssystems (SYS) zu einer Zentrale (ZE), die über eine gemeinsame Leitung mit den mehreren Vorfeldeinrichtungen (BONT, ONU) verbunden ist,
**dadurch gekennzeichnet ,** daß die Überwachungssignale jeder Vorfeldeinrichtung (BONT, ONU) durch Überwachung wenigstens eines Bauteils der jeweiligen Vorfeldeinrichtung (BONT, ONU) generiert werden und zu zeitlich variablen Sendezeiten, die in jeder Vorfeldeinrichtung (BONT, ONU) generiert werden, zur Zentrale übertragen werden.

5. Verfahren nach Anspruch 4, dadurch gekennzeichnet, daß die Überwachungssignale jeder Vorfeldeinrichtung (BONT, ONU) durch Vergleiche von Ausgangssignalen des wenigstens einen Bauteils mit Sollwerten generiert werden, und daß im Falle des Unterschreitens eines minimalen Sollwertes oder im Falle des Überschreitens eines maximalen Sollwertes keine Überwachungssignale an die Zentrale übertragen werden.

6. Verfahren nach Anspruch 4, dadurch gekennzeichnet, daß die Überwachungssignale FSK-moduliert übertragen werden.
